## Europäisches Patentamt
## European Patent Office
## Office européen des brevets

(19)

(11) Numéro de publication: **0 154 340**
**B1**

(12)

# FASCICULE DE BREVET EUROPEEN

(45) Date de publication du fascicule du brevet:
**28.12.88**

(51) Int. Cl.⁴: **G 06 F 15/332**

(21) Numéro de dépôt: **85102564.3**

(22) Date de dépôt: **07.03.85**

(54) Processeur de calcul d'une transformée discrète inverse du cosinus.

(30) Priorité: **09.03.84 FR 8403667**

(43) Date de publication de la demande:
**11.09.85 Bulletin 85/37**

(45) Mention de la délivrance du brevet:
**28.12.88 Bulletin 88/52**

(84) Etats contractants désignés:
**BE DE FR GB IT LU NL SE**

(56) Documents cités:
**US-A- 4 385 363**

**IEEE TRANSACTIONS ON COMMUNICATIONS, vol. COM-25, no. 9, septembre 1977, pages 1004-1009, New York, US; WEN-HSIUNG CHEN et al.: "A fast computational algorithm for the discrete cosine transform"**
**IEEE TRANSACTIONS ON ELECTROMAGNETIC COMPATIBILITY, vol. EMC-24, no. 2, mai 1982, pages 278-286, IEEE, New York, US; A. JALALI et al.: "A high-speed FDCT processor for real-time processing of NTSC color TV signal"**
**IEEE TRANSACTIONS ON COMPUTERS, vol. C-31, no. 9, septembre 1982, pages 899-906, IEEE, New York, US; F.A. KAMANGAR et al.: "Fast algorithms for the 2-D discrete cosine transform"**

(73) Titulaire: **ALCATEL CIT, 33, rue Emeriau, F-75015 Paris (FR)**

(72) Inventeur: **Arnould, Emmanuel, Boîte Postale 6 Villarceaux, F-91620 La Ville Du Bois (FR)**
Inventeur: **Dugre, Jean-Pierre, Résidence San Clemente 309 avenue Henri Giraud, F-06140 Vence (FR)**

(74) Mandataire: **Weinmiller, Jürgen et al, Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention est relative aux processeurs de calcul de la transformée discrète inverse du cosinus, rentrant notamment dans des systèmes de décompression et de décodage, à la réception de signaux numériques d'image de télévision sur des liaisons à largeur de bande limitée.

L'utilisation de techniques de codage numérique et de compression est déjà connue pour le traitement de signaux d'image de télévision à transmettre, sans dégradation notable, sur des liaisons à largeur de bande limitée. Certaines de ces techniques permettant un traitement d'un signal d'image de télévision en temps réel et l'obtention de résultats satisfaisants tant sur la qualité d'image transmise que sur le rapport de compression obtenu font appui au calcul de la transformée discrète du cosinus en deux dimensions. Pour ce calcul, le signal d'image de télévision est divisé en blocs matriciels successifs de N × N éléments d'image numériques, non chevauchants. Ces blocs sont convertis en ensembles successifs de N × N coefficients de transformée discrète du cosinus à deux dimensions qui quantifiés et codés sont ensuite transmis en ligne.

A la réception, la restitution des blocs matriciels de N × N éléments d'image numériques permettant de reconstituer le signal d'image de télévision original est obtenue par calcul de la transformée discrète inverse du cosinus en deux dimensions des ensembles successifs de N × N coefficients eux-mêmes restitués par décodage du signal reçu.

Qu'il s'agisse de la transformée discrète du cosinus ou de la transformée inverse, le calcul de la transformée en deux dimensions se ramène à des calculs de transformée de même nature en une dimension, transformée discrète du cosinus dans le premier cas et transformée inverse dans le second cas.

Le calcul d'une telle transformée, directe ou inverse, en une dimension est effectué en réalisant une suite d'opérations réelles définies dans le temps sous forme d'un algorithme.

L'article intitulé «A Fast Computational Algorithm for the Discrete Cosine Transform» de Wen-Hsiung Chen, C. Harrison Smith et S.C. Fralick, publié dans IEEE Transactions on Communications, septembre 1977, pages 1004–1009, donne un algorithme de calcul de la transformée discrète du cosinus d'une suite de N données applicable pour $N = 2^n$ avec n supérieur ou égal à 2. Cet algorithme décompose le traitement des N données de la suite à transformer, pour l'obtention, à un facteur de normalisation près, des N données transformées correspondantes ou coefficients correspondants, en un nombre limité d'étapes successives fournissant chacune N résultats. Cet algorithme, qui est du type connu sous la dénomination anglo-saxonne de «butterfly algorithm», est illustré par un diagramme qui est bidirectionnel, audit facteur de normalisation près, c'est-à-dire qu'il illustre également, dans le sens allant des coefficients vers les données initiales, la suite des étapes successives permettant d'obtenir les N données initiales à partir de N coefficients.

La demande de brevet EP-A-154 341 déposée ce même jour par la demanderesse et publiée le 11. 09. 85, décrit une architecture de processeur de calcul de transformée discrète de cosinus basée sur l'utilisation d'un algorithme modifié établi à partir de celui connu cité ci-avant et dit algorithme de W.H. Chen et autres.

La présente demande a pour but de définir une architecture simple de processeur de calcul de transformée discrète inverse du cosinus mettant en œuvre un algorithme déduit de celui modifié par la demanderesse pour le calcul de la transformée discrète du cosinus, qui conduit à une structure finale très simple, de faible taille et aisément intégrable.

Elle a donc pour objet un processeur de calcul de transformée discrète inverse du cosinus comportant, pour le calcul de la transformée d'une suite de N données numériques dits coefficients, $N = 2^n$, n entier supérieur à 2, des unités arithmétiques d'addition/soustraction et de multiplication, caractérisé par le fait qu'il est organisé en quatre étages successifs de calcul chacun affecté à une seule et même opération et constituant ensemble un module processeur commandé par une mémoire programmée, que lesdits étages comportent:

– pour le premier étage, dit d'entrée du module, une unité arithmétique de multiplication reliée à une mémoire adressable de valeurs de fonctions cosinus et sinus associée, et un multiplexeur d'entrée reliant sélectivement un bus d'entrée du module recevant lesdits coefficients ou un bus interne au module et dit de bouclage à ladite unité de multiplication, ladite unité de multiplication délivrant les produits successivement élaborés sur un bus de sortie d'étage,

– et pour le deuxième, le troisième et le quatrième étage, chacun, une unité arithmétique d'addition/soustraction à deux bus d'entrée et un bus de sortie d'étage, le bus de sortie du quatrième étage constituant le bus de sortie du module, deux registres de mémoire adressable chargés à partir du bus de sortie de l'étage en amont directement de celui considéré, et deux multiplexeurs d'entrée d'étage reliant chacun sélectivement le bus de sortie dudit étage amont ou le bus de sortie de l'un des registres de l'étage considéré à l'un des bus d'entrée de ladite unité d'addition/soustraction de cet étage, et que ledit bus de bouclage est relié au bus de sortie de l'un des registres de mémoire adressable dudit quatrième étage.

Selon un mode de réalisation particulier de l'invention, ce processeur, appliqué au calcul de la transformée en deux dimensions de blocs matriciels de N × N coefficients correspondant à la transformée directe de blocs matriciels de N × N éléments d'image numériques d'un signal d'image, comporte, en outre, un jeu de trois mémoires adressables, dites première, deuxième et troisième mémoires, associées audit module processeur et commandées individuellement en écriture et en lecture par ladite mémoire programmée, et, pour chacune desdites première, deuxième et troisième mémoires, deux multiplexeurs l'un dit de transfert de mots entrants et sortants de la mémoire concernée, l'autre dit d'adressage de cette mémoire et tous deux commandés simultanément par ladite mémoire programmée, les multiplexeurs de transfert des mots entrants et sortants assurant, en deux séquences de traitement, pour l'ensemble des trois mémoires, la liaison sélective de ladite première mémoire mise en lecture puis ladite deuxième mémoire alors également mise en lecture avec le bus d'entrée dudit module tandis que respectivement pendant ces mêmes séquences la deuxième mémoire mise en écriture puis la troisième mémoire alors également mise en écriture sont reliées au bus de sortie dudit module et ceux d'adressage transmettant auxdites mémoires, pendant ces mêmes séquences, les adresses successives de lecture ou d'écriture de chacune des mémoires, fournies par ladite mémoire programmée.

Les caractéristiques et avantages de la présente invention ressortiront de la description donnée ci-après d'un mode préféré de réalisation illustré dans les dessins ci-annexés. Dans ces dessins:

– La figure 1 illustre le diagramme d'un algorithme modifié selon la présente demande pour le calcul de la transformée discrète inverse du cosinus en une dimension,

– La figure 2 représente un processeur de calcul de la transformée discrète inverse du cosinus en une dimension, selon l'invention, dit module processeur, mettant en œuvre l'algorithme de la figure 1,

– La figure 3 représente un processeur de calcul de la transformée discrète inverse du cosinus en deux dimensions, construit autour du module selon la figure 2.

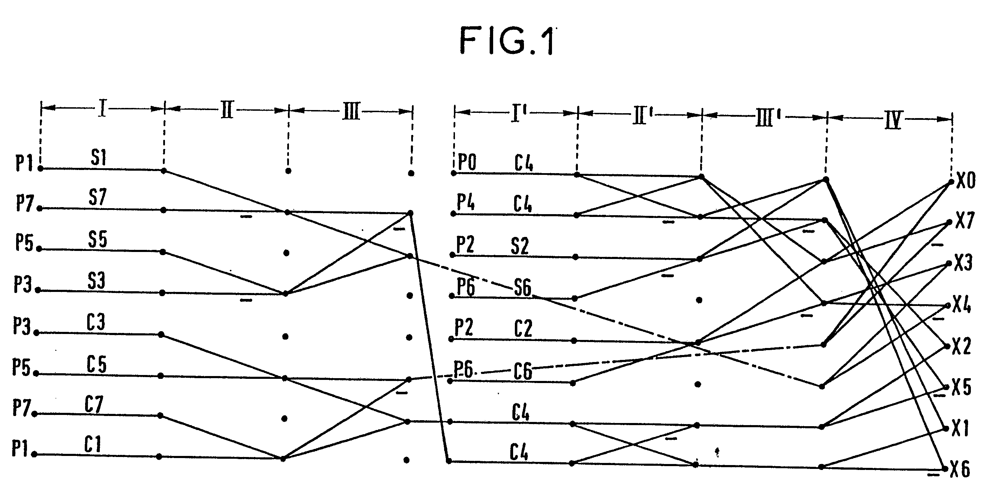

Dans la figure 1, le diagramme de l'algorithme modifié, selon l'invention, pour le calcul de la transformée discrète inverse du cosinus d'une suite de N coefficients Pi, i = 0, 1... N-1, N = 8, par exemple résultant de la transformation directe d'une suite de N données numériques Xi montre que la reconstitution des N données numériques Xi est effectuée par un traitement, par étapes successives, portant sur les N coefficients Pi qui constituent les données d'entrée. Chacune des étapes est divisée en 8 cycles opératoires pour N = 8 au cours desquels peuvent être délivrés des résultats intermédiaires élaborés ou les résultats finals du traitement, c'est-à-dire les 8 données Xi. Ces étapes successives sont notées I, II, III, I', II', III' et IV. Elles consistent:

– au niveau de la première étape I, à effectuer des opérations de multiplication entre quatre des données d'entrée, P1, P7, P5, P3 répétées deux fois et des valeurs définies de fonctions cosinus et sinus notées Ci et Si avec Ci = Cos $\dfrac{i\,\pi}{16}$ et Si

$= \sin \dfrac{i\,\pi}{16}$,

– au niveau de la deuxième étape II, à effectuer des opérations d'addition ou soustraction entre paires convenables de résultats intermédiaires obtenus de l'étape I,

– au niveau de la troisième étape III, à effectuer des opérations d'addition ou soustraction entre paires convenables de résultats issus de l'étape II,

– au niveau de la quatrième étape I', à effectuer des opérations de multiplication entre les quatre autres données d'entrée P0, P4, P2 et P6, pour certaines répétées, et des résultats issus de l'étape III par des valeurs définies Ci et Si de fonctions sinus et cosinus,

– au niveau de la cinquième étape II', à effectuer des opérations d'addition ou soustraction entre paires convenables de résultats issus de l'étape I',

– au niveau de la sixième étape III', à effectuer des opérations d'addition ou soustraction entre paires convenables de résultats issus de l'étape II',

– et au niveau de la septième et dernière étape IV, à effectuer des opérations d'addition ou soustraction entre paires convenables de résultats issus de l'étape III' ou de l'étape III.

Les huit données Xi correspondant aux coefficients Pi sont obtenus à la fin de l'étape de traitement IV, au cours des cycles opératoires de cette étape.

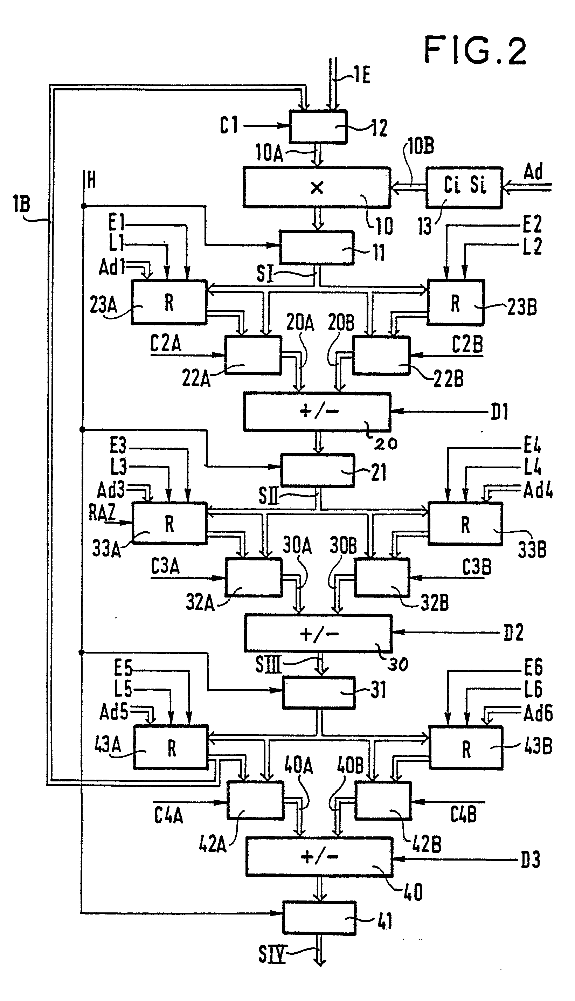

Le processeur de calcul représenté dans la figure 2 effectue les calculs successifs illustrés dans le diagramme de la figure 1, en tirant profit de l'analogie entre les étapes successives I, II et III et les étapes successives I', II', III' dont les traitements peuvent être exécutés par les mêmes circuits et de la possibilité d'utilisation des résultats issus de l'étape III pour une partie d'entre eux au cours de l'étape I' et pour l'autre partie avec ceux issus de l'étape III' au cours de l'étape IV. La structure résultante du processeur se trouve en conséquence simplifiée et constitue un module processeur intégrable.

Ainsi le processeur de calcul illustré dans la figure 2 comprend quatre étages successifs de calcul portant sur les 8 coefficients d'entrée. Ces étages comportent essentiellement, pour le premier étage, dit d'entrée du module, une unité arithmétique de multiplication 10 et pour chacun des second, troisième et quatrième étage, une unité arithmétique d'addition/soustraction identifiée par la référence 20, 30 ou 40 selon l'étage considéré. Un registre de sortie d'étage commandé sur l'un des fronts d'un signal d'horloge H, soit les registres de sortie 11, 21, 31 et 41 pour ces quatre étages, assure la délivrance des résultats élaborés dans l'étage.

Ces unités de multiplication 10 et d'addition/soustraction 20, 30 et 40 ont chacune deux bus d'entrée identifiés par la référence affectée à l'unité considéré, accompagnée de la lettre A ou B. Elles ont chacune un bus de sortie considéré sur le registre de sortie associé, désigné par la lettre S accompagnée du chiffre I, II, III ou IV

utilisé, sans ou avec le signe «prime», pour désigner l'étape de traitement effectué dans le diagramme donné dans la figure 1. Le bus de sortie SIV du quatrième étage, dit étage de sortie du module, constitue le bus de sortie du module sur lequel seront délivrés les 8 éléments d'image correspondant aux huit coefficients d'entrée. Les unités d'addition/soustraction 20, 30 et 40 reçoivent en outre chacune un signal de commande addition/soustraction désigné par D1, D2 ou D3 selon l'unité 20, 30 ou 40 considérée.

Dans ce module processeur, le circuit multiplicateur 10 du premier étage a l'un de ses bus d'entrée 10A relié sélectivement par un circuit multiplexeur d'entrée d'étage 12 commandé par un signal C1 soit à un bus d'entrée 1E du module recevant lesdits coefficients soit à un bus interne au module et dit bus de bouclage 1B. Il a son deuxième bus d'entrée 10B relié à une mémoire adressable 13 de valeurs de fonctions cosinus et sinus qui lui est associée, mémorisant les valeurs définies Ci et Si de ces fonctions, $Ci = \cos \dfrac{i\,\pi}{16}$ et $Si = \sin \dfrac{i\,\pi}{16}$, pour N = 8, et commandée par un signal d'adresse de lecture de la mémoire Ad.

Dans ce module processeur, l'unité d'addition/soustraction 20, 30 ou 40, de chacun des deuxième, troisième et quatrième étages, a chacun de ses bus d'entrée également relié sélectivement par un circuit multiplexeur d'entrée d'étage soit au bus de sortie de l'étage directement amont, soit au bus de sortie d'un registre de mémoire adressable d'entrée de l'étage considéré.

Ainsi, dans le second étage, deux circuits multiplexeurs 22A, 22B, commandés par un signal C2A et un signal C2B respectivement, relient sélectivement, l'un le bus de sortie SI ou le bus de sortie d'un registre de mémoire 23A au bus d'entrée 20A et l'autre le bus de sortie SI ou le bus de sortie d'un registre 23B à l'autre bus d'entrée 20B de l'unité d'addition/soustraction 20. Ces deux registres de mémoire 23A et 23B sont chargés à partir du bus de sortie SI. Ils sont susceptibles chacun de mémoriser plusieurs résultats issus du bus de sortie SI du premier étage et peuvent comporter, en conséquence, plusieurs étages registre R. Dans l'exemple décrit l'un des registres de mémoire, 23A, sera constitué de 2 étages registres R pour permettre de mémoriser simultanément 2 résultats issus dans le temps de SI, l'autre 23B ne sera constitué que d'un seul étage registre R. Ces registres de mémoire sont en outre individuellement commandés en écriture par un signal E1 pour le registre 23A et E2 pour le registre 23B et en lecture par un signal L1 pour le registre 23A et L2 pour le registre 23B. Pour son chargement comme pour la sortie de l'un des résultats mémorisés, le registre de mémoire 23A sera aussi commandé par un signal d'adressage Ad1.

D'une manière analogue, deux circuits multiplexeurs 32A et 32B et deux registres de mémoire adressable 33A et 33B sont associés à l'unité d'addition/soustraction 30 et deux autres circuits multiplexeurs 42A et 42B et deux autres registres de mémoire adressable 43A et 43B sont associés à l'unité d'addition/soustraction 40. Ces circuits multiplexeurs sont commandés individuellement par un signal C3A, C3B, C4A ou C4B selon les circuits. Les registres de mémoire sont également commandés individuellement par des signaux de commande d'écriture, de lecture et d'adressage désignés respectivement par les références E, L et Ad accompagnées du chiffre 3 en ce qui concerne le registre 33A, 4 en ce qui concerne le registre 33B, 5 en ce qui concerne le registre 43A et 6 en ce qui concerne le registre 43B. Ces registres de mémoire sont aussi susceptibles de mémoriser plusieurs des résultats issus du bus de sortie de l'étage directement amont et comporteront, en conséquence plusieurs étages registres R. Dans l'exemple décrit, les registres de mémoire 33A et 33B seront constitués de deux étages registre R chacun, le registre de mémoire 43A de quatre étages registre R et le registre de mémoire 43B de trois étages registre R. En outre, le registre de mémoire 33A sera commandé par un signal RAZ de mise à zéro de l'un ou l'autre de ses étages R alors adressé.

Le bus de sortie de l'un des registres de mémoire adressable de l'étage de sortie du module, soit le registre de mémoire 43A, est en outre relié par le bus de bouclage 1B au circuit multiplexeur d'entrée 12 de l'étage d'entrée du module.

Les signaux extérieure de commande d'adressage, d'écriture, de lecture et de remise à zéro appliqués aux registres de mémoire individuels 23A, 23B, 33A, 33B, 43A et 43B, celui d'adressage de la mémoire des cosinus et sinus 13, les signaux de commande D1, D2 et D3 des unités d'addition/soustraction 20, 30 ou 40 et les signaux de commande C1, C2A, C2B, C3A, C3B, C4A et C4B des circuits multiplexeurs seront avantageusement délivrés par une mémoire programmée de commande, non représentée. Les données d'entrée à traiter, c'est-à-dire les coefficients à traiter, ainsi que le signal d'horloge H définissant les cycles opératoires, pour la sortie des résultats intermédiaires ou terminaux, seront délivrés par un circuit contrôleur principal, non représenté, pilotant également la mémoire programmée de commande.

Dans cette structure, les bus de données sont tous, exception faite du bus de sortie du module SIV, de 12 bits; ce bus de sortie SIV sera de 8 bits et délivre les données numériques Xi reconstituées par le module sous 8 bits.

Le fonctionnement du module processeur et le déroulement des traitements qu'il effectue sur les coefficients d'entrée sont donnés dans les tableaux I et II ci-après, en regard de cycles opératoires successifs 1, 2, 3... définis par le signal H. Dans ces tableaux, on a indiqué pour une suite de huit coefficients Pi à traiter, i = 0, 1...7, appliqués sur le bus d'entrée 10A du circuit multiplicateur 10, à partir du bus d'entrée 1E du module, au cours de tout ou partie de deux séries de 8 cycles opératoires H, les résultats successifs notés notamment par Ni, Mi, Li et Xi obtenus sur les sorties SI à SIV

TABLEAU I

| H | 10A | SI | | 23A R1 | | R2 | | 23B R | | 20A | | 20B | | SII | 33A R1 | R2 | 33B R1 | R2 | 30A | 30B | SIII |
|---|-----|----|----|----|----|----|----|----|----|----|----|----|----|-----|-----|-----|-----|-----|-----|-----|------|
| 1 | P1 | . | | . | | . | | . | | . | | . | | . | . | . | . | . | . | . | . |
| 2 | P7 | P1 | S1 | . | | . | | . | | . | | . | | . | . | . | . | . | . | . | . |
| 3 | P5 | P7 | S7 | P1 | S1 | . | | . | | P1 | S1 | P7 | S7 | . | . | . | . | . | . | . | . |
| 4 | P3 | P5 | S5 | P1 | S1 | . | | . | | . | | . | | N4 | . | . | . | . | . | . | . |
| 5 | P3 | P3 | S3 | P5 | S5 | . | | . | | P5 | S5 | P3 | S3 | . | N4 | . | . | . | . | . | . |
| 6 | P5 | P3 | C3 | P5 | S5 | . | | . | | . | | . | | N5 | N4 | . | . | . | N4 | N5 | . |
| 7 | P7 | P5 | C5 | P3 | C3 | . | | . | | P3 | C3 | P5 | C5 | . | N4 | . | N5 | . | N4 | N5 | M5 |
| 8 | P1 | P7 | C7 | P3 | C3 | . | | . | | . | | . | | N6 | N4 | . | N5 | . | . | . | M4 |
| 9 | P0 | P1 | C1 | P7 | C7 | . | | . | | P7 | C7 | P1 | C1 | . | N6 | . | N5 | . | . | . | . |
| 10 | P4 | P0 | C4 | P7 | C7 | . | | . | | . | | . | | N7 | N6 | . | N5 | . | N6 | N7 | . |
| 11 | P2 | P4 | C4 | P0 | C4 | . | | . | | P0 | C4 | P4 | C4 | . | N6 | . | N7 | . | N6 | N7 | M7 |
| 12 | P6 | P2 | S2 | P0 | C4 | . | | P4 | C4 | P0 | C4 | P4 | C4 | M0 | N6 | . | N7 | . | . | . | M6 |
| 13 | P2 | P6 | S6 | P0 | C4 | P2 S2 | | P4 | C4 | P2 | S2 | P6 | S6 | M1 | M0 | . | N7 | . | . | . | . |
| 14 | P6 | P2 | C2 | P0 | C4 | P2 S2 | | P4 | C4 | . | | . | | M2 | M0 | M1 | N7 | . | M1 | M2 | . |
| 15 | M6 | P6 | C6 | P2 | C2 | P2 S2 | | P4 | C4 | P2 | C2 | P6 | C6 | . | M0 | M1 | M2 | . | M1 | M2 | L1 |
| 16 | M5 | M6 | C4 | P2 | C2 | P2 S2 | | P4 | C4 | . | | . | | M3 | M0 | M1 | M2 | . | M0 | M3 | L2 |
| 17 | P'1 | M5 | C4 | M6 | C4 | P2 S2 | | P4 | C4 | M6 | C4 | M5 | C4 | . | M0 | 0 | M2 | M3 | M0 | M3 | L0 |
| 18 | P'7 | P'1 | S1 | M6 | C4 | P2 S2 | | M5 | C4 | M6 | C4 | M5 | C4 | L5 | M0 | 0 | M2 | M3 | L5 | 0 | L3 |
| 19 | P'5 | P'7 | S7 | P'1 | S1 | P2 S2 | | M5 | C4 | P'1 | S1 | P'7 | S7 | L6 | M0 | 0 | L5 | M3 | L6 | 0 | L5 |
| 20 | P'3 | P'5 | S5 | P'1 | S1 | P2 S2 | | M5 | C4 | . | | . | | N'4 | M0 | 0 | L5 | L6 | . | . | L6 |
| 21 | P'3 | P'3 | S3 | P'5 | S5 | P2 S2 | | M5 | C4 | P'5 | S5 | P'3 | S3 | . | N'4 | 0 | L5 | L6 | . | . | . |
| 22 | P'5 | P'3 | C3 | P'5 | S5 | P2 S2 | | M5 | C4 | . | | . | | N'5 | N'4 | 0 | L5 | L6 | N'4 | N'5 | . |
| 23 | P'7 | P'5 | C5 | P'3 | C3 | P2 S2 | | M5 | C4 | P'3 | C3 | P'5 | C5 | . | N'4 | 0 | N'5 | L6 | N'4 | N'5 | M'5 |
| 24 | P'1 | P'7 | C7 | P'3 | C3 | P2 S2 | | M5 | C4 | . | | . | | N'6 | N'4 | 0 | N'5 | L6 | . | . | M'4 |
| 25 | P'0 | P'1 | C1 | P'7 | C7 | P2 S2 | | M5 | C4 | P'7 | C7 | P'1 | C1 | . | N'6 | 0 | N'5 | L6 | . | . | . |
| 26 | P'4 | P'0 | C4 | P'7 | C7 | P2 S2 | | M5 | C4 | . | | . | | N'7 | N'6 | 0 | N'5 | L6 | N'6 | N'7 | . |
| 27 | P'2 | P'4 | C4 | P'0 | C4 | P2 S2 | | M5 | C4 | P'0 | C4 | P4 | C4 | . | N'6 | 0 | N'7 | L6 | N'6 | N'7 | M'7 |

EP 0 154 340 B1

TABLEAU II

| H | 43A | | | | 43B | | | 40A | 40B | SIV |
|---|---|---|---|---|---|---|---|---|---|---|
| | R1 | R2 | R3 | R4 | R1 | R2 | R3 | | | |
| 1 | . | . | . | . | . | . | . | . | . | . |
| 2 | . | . | . | . | . | . | . | . | . | . |
| 3 | . | . | . | . | . | . | . | . | . | . |
| 4 | . | . | . | . | . | . | . | . | . | . |
| 5 | . | . | . | . | . | . | . | . | . | . |
| 6 | . | . | . | . | . | . | . | . | . | . |
| 7 | . | . | . | . | . | . | . | . | . | . |
| 8 | M5 | . | . | . | . | . | . | . | . | . |
| 9 | M5 | . | . | . | . | . | . | . | . | . |
| 10 | M5 | . | . | . | L4 | . | . | . | . | . |
| 11 | M5 | . | . | . | L4 | . | . | . | . | . |
| 12 | M5 | M6 | . | . | L4 | . | . | . | . | . |
| 13 | M5 | M6 | . | . | L4 | L7 | . | . | . | . |
| 14 | M5 | M6 | . | . | L4 | L7 | . | . | . | . |
| 15 | M5 | M6 | . | . | L4 | L7 | . | . | . | . |
| 16 | M5 | L1 | . | . | L4 | L7 | . | . | . | . |
| 17 | L2 | L1 | . | . | L4 | L7 | . | L0 | L7 | . |
| 18 | L2 | L1 | L0 | . | L4 | L7 | . | L0 | L7 | X0 |
| 19 | L2 | L1 | L0 | L3 | L4 | L7 | . | L3 | L4 | X7 |
| 20 | L2 | L1 | L0 | L3 | L4 | L5 | . | L3 | L4 | X3 |
| 21 | L2 | L1 | L0 | L3 | L4 | L5 | L6 | L2 | L5 | X4 |
| 22 | L2 | L1 | L0 | L3 | L4 | L5 | L6 | L2 | L5 | X2 |
| 23 | L2 | L1 | L0 | L3 | L4 | L5 | L6 | L1 | L6 | X5 |
| 24 | M'5 | L1 | L0 | L3 | L4 | L5 | L6 | L1 | L6 | X1 |
| 25 | M'5 | L1 | L0 | L3 | L'4 | L5 | L6 | . | . | X6 |
| 26 | M'5 | L1 | L0 | L3 | L'4 | L5 | L6 | . | . | . |
| 27 | M'5 | L1 | L0 | L3 | L'4 | L5 | L6 | . | . | . |

des différents étages et ceux mémorisés dans les étages respectifs R des registres de mémoire. On y a également ébauché le déroulement, identique, des traitements effectués sur une nouvelle suite de coefficients succédant à la précédente en entrée du module processeur affecté au traitement en continu d'une succession de telles suites, les coefficients et résultats relatifs à cette nouvelle suite qui apparaissent dans ces tableaux ayant été repérés par les mêmes références que leurs homologues de la suite précédente accompagnées du signe «prime».

Dans ces tableaux, le symbole «.» représente un état indifférent et les résultats intermédiaires, notés $N_i$, $M_i$ et $L_i$, ainsi que les données de sortie $X_i$, obtenus à partir des coefficients $P_i$, peuvent être définis de la manière suivante:

$$N0 = P0$$
$$N1 = P4$$
$$N2 = P2$$
$$N3 = P6$$
$$N4 = P1\ S1 - P7\ S7$$
$$N5 = P5\ S5 - P3\ S3$$
$$N6 = P3\ C3 + P5\ C5$$
$$N7 = P7\ C7 + P1\ C1$$

$$M0 = N0\ C4 + N1\ C4$$
$$M1 = N0\ C4 - N1\ C4$$
$$M2 = N2\ S2 - N3\ S6$$
$$M3 = N2\ C2 + N3\ C6$$
$$M4 = N4 + N5$$
$$M5 = N4 - N5$$
$$M6 = N6 + N7$$
$$M7 = N6 - N7$$

$$L0 = M0 + M3$$
$$L1 = M1 + M2$$
$$L2 = M1 - M2$$
$$L3 = M0 - M3$$

$$X0 = L0 + L7$$
$$X1 = L1 + L6$$
$$X2 = L2 + L5$$
$$X3 = L3 + L4$$

$$L4 = M4 \qquad X4 = L3 - L4$$
$$L5 = M6\ C4 - M5\ C4 \qquad X5 = L2 - L5$$
$$L6 = M6\ C4 + M5\ C4 \qquad X6 = L1 - L6$$
$$L7 = M7 \qquad X7 = L0 - L7$$

avec $C_i = \cos \dfrac{i\,\pi}{16}$ et $S_i = \sin \dfrac{i\,\pi}{16}$ pour $i = 1, 2...7$.

En regard de ces deux tableaux, il ressort que ce module processeur, à un seul circuit multiplicateur, 3 additionneurs/soustracteurs, 14 étages de registre de mémoire chacun de capacité d'un mot de 12 bits, 7 multiplicateurs de bus et une mémoire des valeurs de cosinus et sinus, effectue les différents calculs de manière séquentielle sur les 8 coefficients de suites successives de 8 coefficients, ces suites pouvant être par exemple des lignes successives d'un bloc matriciel de 8 × 8 coefficients. Cette structure permet d'effectuer le calcul de la transformée en une dimension portant sur 8 coefficients de chaque ligne qui lui sont appliqués sur 2 séries successives de 8 cycles, notés 1 à 16, en délivrant les données de sortie correspondantes en 8 cycles opératoires notés 18 à 25 précédés de 8 cycles opératoires 10 à 17 sans résultat de sortie. Au bloc de 64 coefficients reçus à l'entrée du processeur sur 128 cycles d'horloge successifs correspondra donc un bloc de 64 données de sortie élaboré au cours de 128 cycles d'horloge après une initialisation globale du traitement effectuée sur 9 cycles d'horloge notés 1 à 9.

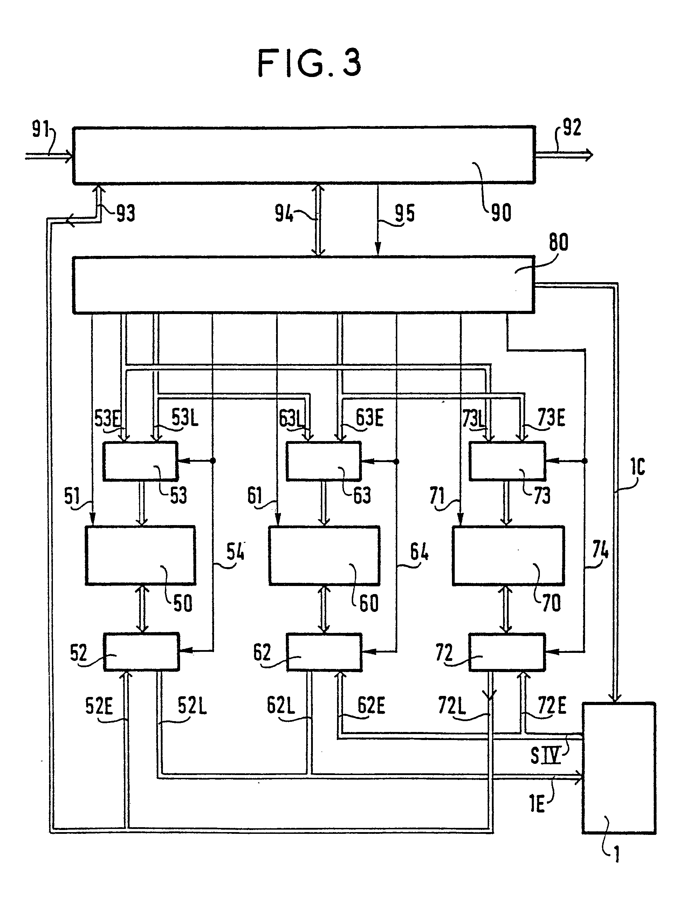

Dans la figure 3, on a schématisé un processeur de calcul de la transformée discrète inverse du cosinus en deux dimensions, traitant des blocs matriciels successifs de 8 × 8 coefficients résultant, par exemple, de la transformation directe de blocs matriciels de 8 × 8 éléments d'image numériques d'un signal d'image de télévision pour élaborer les blocs successifs correspondants de 8 × 8 éléments d'image.

Ce processeur est construit essentiellement sur le module processeur de calcul de la transformée discrète inverse du cosinus en une dimension. Il comporte, outre ce module désigné sous la référence 1 et identique à celui décrit en regard de la figure 2 à ceci près que son bus de sortie aura ici 12 bits:
– trois registres mémoire 50, 60, 70, ou mémoires adressables, reliés au module 1,
– une mémoire programmé 80 de commande des registres 50, 60, 70 et du module 1,
– et un circuit contrôleur principal 90 pilotant la mémoire programmée 80 et assurant le stockage des coefficients, à transférer pour leur traitement par blocs successifs de 64, et le stockage des blocs des 64 éléments d'image issus du traitement.

Le module processeur 1 n'est plus décrit. On a simplement repéré le bus d'entrée et le bus de sortie du module par les références 1E et S IV utilisées dans la figure 2. Il est commandé par la mémoire programmée 80 ainsi qu'indiqué ci-avant, un bus de commande 1C regroupe ces commandes et le signal H provenant du circuit contrôleur 90.

Chacun des registres de mémoire 50, 60 et 70 est de capacité choisie pour mémoriser un bloc de 8 × 8 mots, soit 64 éléments d'image sur 8 bits ou 64 coefficients sur 12 bits chacun. Ils sont individuellement commandés en écriture et lecture par la mémoire programmée de commande 80 et reçoivent un signal d'écriture et lecture traduit par les niveaux logiques 0/1 sur une liaison 51, 61 ou 71. A chacun de ces registres de mémoire 50, 60 70 sont associés un premier multiplexeur de mots entrants ou sortants 52, 62 ou 72 et un second multiplexeur d'adresses pour ces mots, 53, 63 ou 73, tous deux commandés simultanément par un signal de commande délivré par la mémoire programmée de commande 80 par une liaison individuelle 54, 64 ou 74. Ces mémoires adressables ont un bus d'adressage et un bus bidirectionnel d'entrée/sortie de mots, chacune.

Les multiplexeurs de mots 52, 62 ou 72 sont analogues; ils présentent chacun ainsi que schématisé un bus d'entrée pour les mots entrants dans le registre mémoire concerné et bus de sortie pour les mots sortants de ce registre mémoire, ces bus étant repérés par la référence du multiplexeur accompagnée de la lettre E, pour le transfert des mots entrants dans le registre mémoire, et de la lettre L, pour les mots sortants du registre. Leur signal de commande assure une liaison sélective entre leur bus d'entrée ou leur bus de sortie et le bus bidirectionnel d'entrée/sortie de registre de mémoire. Pour le multiplexeur 52, le bus d'entrée 52E est relié au circuit contrôleur principal 90 et le bus de sortie 52L au bus d'entrée 1E du module processeur 1. Pour le multiplexeur 62, le bus d'entrée 62E est relié au bus de sortie SIV du module processeur 1, son bus de sortie 62L est également relié au bus d'entrée 1E du module processeur 1. Pour le multiplexeur 72, le bus d'entrée 72E est relié au bus de sortie SIV du module processeur 1 et son bus de sortie 72L au contrôleur principal 90.

Les multiplexeurs d'adresses 53, 63 et 73 sont aussi analogues entre eux. Ils présentent deux bus d'entrée d'adresses reliés à la mémoire programmée 80 et désignés par les références du multiplexeur accompagnées de la lettre E, pour l'un des bus affecté aux adresses d'écriture des mots entrant dans leur registre de mémoire et par la lettre L pour le deuxième bus affecté aux adresses de lecture des mots sortant de leur registre de mémoire. Ils présentent chacun un bus de sortie. Ils sont commandés individuellement par le signal sur la liaison 54, 64 ou 74 pour assurer sélectivement la liaison entre l'un de leurs deux bus d'entrée et leur bus de sortie, pour délivrer soit les adresses d'écriture des mots entrants soit les adresses de lecture des mots sortants.

Le circuit contrôleur 90 assure le transfert des coefficients par blocs de 64, vers le registre de mémoire 50, reçoit du registre de mémoire 70 les éléments d'image issus des traitements effectués et contrôle le processus général de traitement. Il présente un bus d'entrée 91 pour les suites de blocs de coefficients à traiter, un bus de sortie 92 pour les éléments d'image reconstitués, un bus bidirectionnel 93 de transfert des blocs successifs de coefficients du circuit contrôleur 90 vers le registre de mémoire 50 et des blocs d'éléments d'image du registre de mémoire 70 vers le circuit contrôleur 90, ce bus 93 étant relié au bus 52E et au bus 72L précités. Il présente en outre un bus 94 de contrôle général du processeur sur lequel sont appliqués un signal de demande d'accès du circuit contrôleur aux registres de mémoire 50 et 70, transmis à la mémoire programmée 80, auquel est associé un signal écriture/lecture dans le circuit contrôleur 90, donnant le sens du transfert concerné, un signal de réponse transmis au circuit contrôleur par la mémoire programmée, correspondant à la fonction «prêt à» du processeur. Il fournit en outre le signal d'horloge H, transmis sur une liaison 95, qui définit le rythme des traitements ainsi que, par des liaisons non représentées, les alimentations nécessaires au fonctionnement du processeur.

Le calcul de la transformée en deux dimensions de chaque bloc de 8 × 8 coefficients, fournissant le bloc correspondant de 8 × 8 éléments d'image, est effectué en plusieurs séquences:
– une première séquence qui est une séquence d'initialisation, elle correspond au transfert des 8 × 8 coefficients du bloc de coefficients considéré du circuit contrôleur 90 au registre de mémoire 50, le chargement de ce registre 50 étant effectué aux adresses successives délivrées sur le bus 53E,

– une deuxième séquence qui est une séquence de traitement pour le calcul de la transformée en une dimension de chacune des 8 lignes de 8 coefficients, elle est effectuée par étapes successives par le module 1 recevant les coefficients du registre de mémoire 50 lu aux adresses successives délivrées sur le bus 53L et délivrant les résultats correspondants dans le registre de mémoire 60, chargé aux adresses successives délivrées sur le bus 63E,

– une troisième séquence qui est également une séquence de traitement pour le calcul de la transformée en une dimension des 64 résultats issus de la deuxième séquence convenablement arrangés en 8 groupes de 8, elle est effectuée par étapes successives par le module 1 recevant du registre de mémoire 60 convenablement adressé à partir du bus 63L ces résultats issus de la deuxième séquence et délivrant au registre de mémoire 70 adressé à partir du bus 73E les éléments d'image résultants dont seuls les 8 bits de plus forts poids sont inscrits dans ce registre 70,

– et une quatrième séquence, qui est une séquence finale pour le traitement de ces 64 coefficients, elle correspond au transfert du bloc des 8 × 8 éléments d'image du registre de mémoire 70, lu et adressé à partir du bus 73L, au circuit contrôleur 90.

Pendant les troisième et quatrième séquences relatives aux traitements de chaque bloc de 64 coefficients, s'effectuent aussi les première et deuxième séquences relatives aux traitements du bloc suivant de 64 coefficients.

La présente invention a été décrite en regard d'un calcul effectué sur des suites de 8 coefficients. La même structure peut être utilisée pour effectuer des calculs correspondants portant sur des suites de 16 coefficients, ou plus, en adoptant au niveau du module processeur 1 (figure 2), des registres mémoire de capacité convenable et en effectuant le nombre convenable de bouclages entre la sortie de l'un des registres de mémoire de son quatrième étage et le bus d'entrée de son multiplicateur.

## Revendications

1. Processeur de calcul de transformée discrète inverse du cosinus comportant, pour le calcul de la transformée d'une suite de N données numériques dits coefficients, $N = 2^n$, n entier supérieur à 2, des unités arithmétiques d'addition/soustraction et de multiplication, caractérisé par le fait qu'il est organisé en quatre étages successifs de calcul chacun affecté à une seule et même opération et constituant ensemble un module processeur commandé par une mémoire programmée (80), que lesdits étages comportent:

– pour le premier étage, dit d'entrée du module, une unité arithmétique de multiplication (10) reliée à une mémoire adressable (13) de valeurs de fonctions cosinus et sinus associée, et un multiplexeur d'entrée (12) reliant sélectivement un bus d'entrée (1E) du module recevant lesdits coefficients ou un bus interne (1B) au module et dit de bouclage à ladite unité de multiplication, ladite unité de multiplication délivrant les produits successivement élaborés sur un bus de sortie d'étage (SI),

– et pour le deuxième, le troisième et le quatrième étage chacun, une unité arithmétique d'addition/soustraction (20, 30, 40) à deux bus d'entrée et un bus de sortie d'étage (S II, S III, S IV), le bus de sortie du quatrième étage constituant le bus de sortie du module, deux registres de mémoire adressable (23A, 23B, 33A, 33B, 43A, 43B) chargés à partir du bus de sortie de l'étage en amont directement de celui considéré, et deux multiplexeurs d'entrée d'étage (22A, 22B, 32A, 32B, 42A, 42B) reliant chacun sélectivement le bus de sortie dudit étage amont ou le bus de sortie de l'un des registres de l'étage considéré à l'un des bus d'entrée de ladite unité d'addition/soustraction de cet étage, et que ladite bus de bouclage (1B) est relié au bus de sortie de l'un des registres de mémoire adressable (43A) dudit quatrième étage.

2. Processeur selon la revendication 1, appliqué au calcul de la transformée en deux dimensions de blocs matriciels de N × N coefficients correspondant à la transformée directe de blocs matriciels de N × N éléments d'image numériques d'un signal d'image, caractérisé par le fait qu'il comporte, en outre, un jeu de trois mémoires adressables (50, 60, 70), dites première, deuxième et troisième mémoires, associées audit module processeur (1) et commandées individuellement en écriture et en lecture par ladite mémoire programmée (80), et, pour chacune desdites première, deuxième et troisième mémoires, deux multiplexeurs l'un dit de transfert de mots entrants et sortants de la mémoire concernée, l'autre dit d'adressage de cette mémoire, tous deux commandés simultanément par ladite mémoire programmée, les multiplexeurs de transfert des mots entrants et sortants assurant, en deux séquences de traitement, pour l'ensemble des trois mémoires, la liaison sélective de ladite première mémoire (50) mise en lecture puis de ladite deuxième mémoire (60) alors également mise en lecture avec le bus d'entrée 1E dudit module (1) tandis que respectivement pendant ces mêmes séquences la deuxième mémoire (60) mise en écriture puis la troisième mémoire (70) alors également mise en écriture sont reliées au bus de sortie S IV dudit module (1) et ceux d'adressage transmettant auxdites mémoires, pendant ces mêmes séquences, les adresses successives de lecture ou d'écriture de chacune des mémoires, fournies par ladite mémoire programmée (80).

3. Processeur selon la revendication 2, caractérisé par le fait qu'il comporte, en outre, un circuit contrôleur principal (90) assurant le stockage desdits coefficients et desdits éléments d'image correspondants élaborés, par blocs de N × N, relié pendant une séquence dite d'initialisation à ladite première mémoire (50) pour le chargement de chacun des blocs successifs de N × N coefficients dans cette première mémoire et, pendant une séquence dite finale à ladite troisième mémoire (70) pour le déchargement, du bloc de N × N éléments d'image reconstitués, de cette troisième mémoire (70).

## Claims

1. A processor for calculating the discrete inverse cosine transform, comprising arithmetical additional and subtraction units and multiplication units for the calculation of the transform of a sequence of N digital data, called coefficients, where $N = 2^n$ and n is an integer greater than 2, characterized in that it is organized in four successive calculation stages each assigned to a single and equal operation and together constituting a processor module which is controlled by a programmed storage (80),
– that the first stage, called input module stage, comprises an arithmetical multiplication unit (10) connected to an associated addressable storage (13) holding sine and cosine function values, and an input multiplexer (12) selectively connecting an input bus (1E) of the module receiving said coefficients, or an internal bus (1B) of the module called loopback bus, to said multiplication unit, said multiplication unit delivering the successive products obtained on a stage output bus (SI),
– that the second, third and fourth stages each comprise an arithmetic addition and subtraction unit (20, 30, 40) having two input busses and a stage output bus (SII, SIII, SIV), the output bus of the fourth stage constituting the output bus of the module, two addressable storage registers (23A, 23B, 33A, 33B, 43A, 43B), loaded from the output bus of the stage immediately preceding the concerned stage, and two stage input multiplexers (22A, 22B, 32A, 32B, 42A, 42B) which each connect selectively the output bus of said immediately preceding stage or the output bus of one of the registers of the concerned stage to one of the input busses of the addition and substraction unit of this stage, and that said loopback bus (1B) is connected to the output bus of one of the addressable storage registers (43A) of the fourth stage.

2. A processor according to claim 1, applied to the calculation of the two-dimensional transform of matrix blocks of N × N coefficience corresponding to the direct transform of matrix blocks of N × N digital picture elements of a picture signal, characterized in that it further comprises a set of three addressable storages (50, 60, 70), referred to as first, second and third storages, associated to said processor module (1) and individually controlled in read and write modes by said programmed storage (80), and for each one of said first, second and third storages, two multiplexers, the first one referred to as input and output word transfer multiplexer of the concerned storage and the other referred to as storage addressing multiplexer, both controlled simultaneously by said programmed storage, the input and output word transfer multiplexers ensuring in two processing sequences for the entire set of three storages the selective connection of said first storage (50) in the read mode, than the second storage (60) in read mode to the input bus (1E) of said module (1) while during these same sequences, the second storage (60) in the write mode and then the third storage (70) also in the write mode are connected to the output bus S4 of said module (1) and the addressing multiplexers transmitting to said storages during these same sequences the successive read and write addresses of each one of the storages supplied by the programmes storage (80).

3. A processor according to claim 2, characterized in that it further comprises a main controller circuit (90) adapted to store said coefficience and said corresponding elaborated picture elements in blocks of N × N, connected during a sequence called initialisation to said first storage (50) two loads, each of the successive blocks N × N coefficience onto this first storage, and during a final sequence connected to said third storage (70) to unload the block of N × N reconstituted picture elements from this third storage (70).

## Patentansprüche

1. Prozessor zur Berechnung der diskreten inversen Kosinustransformierten unter Verwendung von arithmetischen Additions-Subtraktionseinheiten sowie Multipliziereinheiten zur Berechnung der Transformierten einer Folge von N digitalen Daten, Koeffizienten genannt, wobei $N = 2^n$ und n eine ganze Zahl grösser 2 ist, dadurch gekennzeichnet, dass der Prozessor in vier aufeinanderfolgenden Rechenstufen organisiert ist, die je nur eine einzige und gleiche Operation durchführen und gemeinsam einen Prozessormodul bilden, der von einem programmierten Speicher (80) gesteuert wird,
– dass in der ersten Stufe, Eingangsmodul genannt, eine arithmetische Multipliziereinheit (10), die an einen adressierbaren Speicher (10) zur Speicherung von zugeordneten Kosinus- und Sinusfunktionswerten angeschlossen ist, und ein Eingangsmultiplexer (12) vorgesehen sind, der selektiv eine Eingangsschiene (1E) des Moduls, die die Koeffizienten empfängt, oder eine modulinterne Schiene (1B), die Schleifenschiene genannt wird, an die Multipliziereinheit anschliesst, wobei die Multipliziereinheit die nacheinander ermittelten Produkte an eine Ausgangsschiene (SI) der Stufe liefert,
– und dass in der zweiten, dritten und vierten Stufe je eine arithmetische Additions/Subtraktionseinheit (20, 30, 40) mit zwei Eingangsschienen und einer Stufenausgangsschiene (SII, SIII, SIV), wobei die Ausgangsschiene der vierten Stufe die Ausgangsschiene des Moduls bildet, zwei adressierbare Speicherregister (23A, 23B, 33A, 33B, 43A, 43B), die von der Ausgangsschiene der unmittelbar vor der betrachteten Stufe liegenden Stufe geladen werden, und zwei Stufeneingangsmultiplexer (22A, 22B, 32A, 32B, 42A, 42B) vorgesehen sind, die je selektiv die Ausgangsschiene der davorliegenden Stufe oder die Ausgangsschiene eines der Register der betreffenden Stufe an eine der Eingangsschiene der Additions/Subtraktionseinheit dieser Stufe anschliessen, und dass die Schleifenschiene (1B) an die Ausgangsschiene eines der adressierbaren Speicherregister (43A) der vierten Stufe angeschlossen ist.

2. Prozessor nach Anspruch 1, in Anwendung auf die Berechnung der zweidimensionalen Transformierten von Matrixblocks, die N × N Koeffizienten entsprechend der direkten Transformierten von Matrixblocks von N × N digitalen Bildelementen eines Bildsignals entsprechen, dadurch gekennzeichnet, dass er ausserdem einen Satz von drei adressierbaren Speichern (50, 60, 70), erster, zweiter und dritter Speicher genannt, die dem Prozessormodul (1) zugeordnet sind und einzeln von dem programmierten Speicher (80) zum Schreiben und Lesen angesteuert werden, und für jeden der ersten, zweiten und dritten Speicher zwei Multiplexer aufweist, von denen einer für den Transfer von Eingangs- und Ausgangswörtern des betreffenden Speichers und der andere zur Adressierung dieses Speichers bestimmt ist, sowie beide zugleich vom programmierten Speicher gesteuert werden, wobei die Multiplexer, die den Transfer der Eingangs- und Ausgangswörter bewirken, in zwei Bearbeitungssequenzen für alle drei Speicher die selektive Verbindung des ersten Speichers (50) im Lesebetrieb, dann des zweiten Speichers (60), der dann auch im Lesebetrieb ist, mit der Eingangsschiene 1E des Moduls (1) sichern, wogegen während dieser selben Sequenzen der zweite Speicher (60) im Schreibbetrieb und dann der dritte Speicher (70) ebenfalls im Schreibbetrieb mit der Ausgangsschiene SIV des Moduls (1) verbunden sind, und wobei die Adressiermultiplexer den Speichern während derselben Sequenzen die vom programmierten Speicher (80) gelieferten aufeinandefolgenden Lese- und Schreibadressen für jeden der Speicher liefern.

3. Prozessor nach Anspruch 2, dadurch gekennzeichnet, dass er ausserdem einen Hauptkontrollkreis (90) aufweist, der die Speicherung der Koeffizienten und der erarbeiteten entsprechenden Bildelemente in Blocks von N × N bewirkt und während einer Startsequenz mit dem ersten Speicher (50) für das Laden jedes der aufeinanderfolgenden Blöcke von N × N Koeffizienten in diesen ersten Speicher und während einer Schlusssequenz mit dem dritten Speicher (70) verbunden ist, um den Block von N × N wiedergewonnenen Bildelementen aus diesem dritten Speicher (70) zu entladen.

# FIG.1

EP 0 154 340 B1

# FIG.2

# FIG. 3